# EUROPÄISCHE PATENTANMELDUNG

(11) **EP 0 774 660 A2**
(43) Veröffentlichungstag der Anmeldung: **21.05.1997**
(21) Anmeldenummer: 96110023.7
(22) Anmeldetag: 21.06.1996
(51) Int. Cl.: G01N 25/44

(54) **Verbrennungsbehälter für Kalorimeter**

(30) Priorität: 11.11.1995 DE 19542138
(71) Anmelder: IKA ANALYSENTECHNIK GmbH, D-79423 Heitersheim (DE)
(72) Erfinder: Pinhack, Hubert, 79423 Heitersheim-Gallenweiler (DE); Gegg, Rolf, 79111 Freiburg (DE)
(74) Vertreter: Schmitt, Hans, Dipl.-Ing.

(57) **Zusammenfassung**

Ein Verbrennungsbehälter (1) für Kalorimeter hat ein einen Reaktionsraum (5) enthaltendes Gefäß (3) mit einem öffenbaren Deckel (4) und besteht aus Titan. Um zu verhindern, daß bei den in einem solchen Verbrennungsbehälter bestehenden Bedingungen eines hohen Sauerstoff-Partialdruckes in Verbindung mit hoher Temperatur das Titan zu brennen beginnt, weist das Gefäß (3) an seiner Innenseite eine dicht anliegende Auskleidung (6) aus einer Metall-Legierung oder aus einem Metall auf, welches bei den erwähnten Bedingungen unbrennbar ist, beispielsweise eine Auskleidung aus insbesondere hochlegiertem Stahl, zum Beispiel aus Chrom-Nickel-Stahl. Im Bereich der Dichtung (11) des Deckels (4) hat die Auskleidung (6) einen ihren Querschnitt erweiternden Absatz (10), so daß diese Dichtung (11) auch räumlich von dem Reaktionsraum (5) abgeschirmt ist.

## Beschreibung

Die Erfindung betrifft einen Verbrennungsbehälter für Kalorimeter mit einem einen Reaktionsraum umschließenden Gefäß und mit einem öffenbaren Deckel sowie mit einem Probehalter für das zu untersuchende Gut, welcher Verbrennungsbehälter die Verbrennungswärme aufnimmt und an ein umgebendes Medium weiterleitet, so daß aus der Erwärmung des Verbrennungsbehälters und dieses Mediums der Verbrennungsenergiegehalt der Probe bestimmbar ist, wobei zumindest das Gefäß des Verbrennungsbehälters aus Titan besteht.

Es sind verschiedene Verbrennungsbehälter bekannt, die in Kalorimeter eingesetzt werden. Durch die Verbrennung im Inneren des Behälters wird dieser belastet und muß deshalb aus einem gegen Verbrennungseinflüsse möglichst resistenten Werkstoff bestehen.

Bekannt ist die Verwendung von hochlegiertem Stahl, gegebenenfalls mit einer Auskleidung mit Platin, was aber sehr teuer ist.

Die aus Stahl bestehenden Verbrennungsbehälter haben ein relativ hohes Gewicht, da sie eine entsprechende Dicke haben müssen, um bei der Verbrennung auftretende Drücke aushalten zu können.

Darüber hinaus wird eine gewisse Zeit benötigt, um die bei der Verbrennung freiwerdende Wärme zunächst von dem Stahlbehälter aufzunehmen und dann an das umgebende Medium abzugeben. Da der Behälter aus Stahl eine große Masse hat, hat er auch eine entsprechend große Wärmekapazität, das heißt, die Erhöhung der Behältertemperatur ist relativ klein, so daß auch das Temperaturgefälle zwischen dem erwärmten Verbrennungsbehälter und dem umgebenden Medium relativ klein ist. Dies bedeutet, daß der Wärmeausgleich zwischen dem Verbrennungsbehälter und dem Medium lange dauert, was die Analysenzeit entsprechend verlängert und den externen Einfluß, beispielsweise ungewollte Wärmeabstrahlungen, verlängert.

Es wurde auch schon vorgeschlagen, solche Verbrennungsbehälter aus Titan zu fertigen. Versuche haben jedoch gezeigt, daß ein aus Titan bestehender Verbrennungsbehälter bei den in ihm auftretenden Bedingungen eines hohen Sauerstoff-Partialdruckes in Verbindung mit hoher Temperatur selbst brennt, so daß je nach Menge des Sauerstoffes eine erhebliche Gefahr für den Benutzer besteht und im übrigen ein solcher aus Titan bestehender Verbrennungsbehälter unbrauchbar ist.

Titan hat jedoch gegenüber einem Verbrennungsbehälter aus Stahl oder aus einem Verbundwerkstoff erhebliche Vorteile. So hat Titan eine geringere spezifische Wärmekapazität, eine hohe Festigkeit und ein geringeres spezifisches Gewicht und damit eine wesentlich geringere absolute Gesamtwärmekapazität. Durch die wesentlich geringere Wärmekapazität des Verbrennungsbehälters ergibt sich bei gleichem Wärmeeintrag eine bedeutend größere Temperaturerhöhung. Dadurch erfolgt ein schnellerer Energieaustausch mit dem umgebenden Medium; vornehmlich mit Wasser. Dies führt zu einer Meßzeitverkürzung und damit zu einer präziseren Messung durch Verringerung von unkontrolliertem Energieaustausch. Weiterhin trägt das geringere Gesamtgewicht zu einer verbesserten Handhabung bei.

Der Erfindung liegt deshalb die Aufgabe zugrunde, einen Verbrennungsbehälter der eingangs erwähnten Art zu schaffen, bei welchem die Vorteile des Werkstoffes Titan genutzt werden können, also gute Wärmeübergangsbedingungen bei gleichzeitig geringem Gewicht erreicht werden können, trotzdem aber die Gefahr der Entzündung und Verbrennung des Behälters selbst vermieden wird.

Zur Lösung dieser Aufgabe ist der Verbrennungsbehälter mit Gefäß der eingangs genannten Art dadurch gekennzeichnet, daß das Gefäß an seiner Innenseite eine dicht anliegende Auskleidung aus einer Metall-Legierung oder aus einem Metall aufweist, welches bei den in dem Verbrennungsbehälter auftretenden Bedingungen und Reaktionen unbrennbar ist.

Zumindest das Gefäß des Verbrennungsbehälters kann also trotz der Entzündungsgefahr aus Titan bestehen, weil dieser Werkstoff aufgrund der Auskleidung von dem Sauerstoff und auch der im Reaktionsraum ablaufenden Verbrennung ferngehalten und abgeschirmt wird. Somit kann zwar der größte Teil des Gefäßes aus Titan bestehen, so daß dessen Vorteile in erwünschter Weise nutzbar gemacht werden, ohne aber den Nachteil in Kauf zu nehmen, der in der Gefahr einer Selbstentzündung aufgrund des hohen Sauerstoff-Partialdruckes in Verbindung mit hoher Temperatur während einer Reaktion in dem Gefäß besteht.

Besonders zweckmäßig ist es dabei, wenn die Auskleidung aus Stahl, insbesondere aus hochlegiertem Stahl, zum Beispiel aus Chrom-Nickel-Stahl, besteht. Dieser Werkstoff hat sich im Zusammenhang mit solchen Gefäßen von Verbrennungsbehältern für Kalorimeter bereits bewährt, das heißt seine Widerstandsfähigkeit gegen die im Inneren des Reaktionsraumes auftretenden Bedingungen kann in zweckmäßiger Weise ausgenutzt werden, wobei aber trotzdem die Nachteile eines Stahlbehälters, nämlich das hohe Gewicht und die große Wärmekapazität eines Stahlgefäßes mit der relativ geringen Erhöhung der Temperatur dieses Gefäßes, vermieden werden können.

Eine für die Herstellung besonders zweckmäßige Ausführungsform der Erfindung kann darin bestehen, daß die Auskleidung die Form eines Topfes hat, der in den Reaktionsraum des Gefäßes aus Titan eingesetzt oder eingefügt, insbesondere eingeschrumpft ist, wobei vorzugsweise die Außenseite dieses Topfes die Wandung und den Boden des Reaktionsraumes fugenlos berührt. Somit können einerseits das Gefäß aus Titan und andererseits dessen Auskleidung beispielsweise durch eine spanende Verformung sehr genau aufeinander abgestimmt und dann zusammengefügt werden, so daß sich auch ein guter Wärmeübergang durch die Auskleidung hindurch ergibt.

Es ist jedoch auch möglich, daß die Auskleidung eine Beschichtung, zum Beispiel eine durch Bedampfung gebildete Beschichtung ist. Auf diese Weise läßt sich der Übergang von der Auskleidung zu dem Titan des Gefäßes noch besser herbeiführen, zumal unter Umständen dann auch die Dicke der Auskleidung noch erheblich vermindert sein kann.

Zweckmäßig ist es ferner, wenn der Deckel und/oder die ihn festlegende Haltevorrichtung, insbesondere eine Überwurfmutter, aus Titan bestehen und zumindest die in Gebrauchsstellung dem Reaktionsraum zugewandte Oberfläche insbesondere mit dem Metall oder der Metall-Legierung bekleidet oder beschichtet ist, womit der Reaktionsraum des Gefäßes ausgekleidet ist. Somit wird auch die dem Reaktionsraum zugewandte Seite des Deckels, der in vorteilhafter Weise ebenfalls aus Titan bestehen kann, gegen eine Entzündung oder Verbrennung geschützt.

Damit ein als Auskleidung dienender Topf fugenlos und weitestgehend ohne Beeinträchtigung des Wärmeüberganges in das Gefäß aus Titan eingefügt oder eingeschrumpft werden kann, kann das Gefäß an seinem Boden wenigstens eine durchgehende Öffnung oder Bohrung haben, die von der Auskleidung gegenüber dem Reaktionsraum abgeschlossen ist. Beim Einschieben des Topfes in das Gefäß kann so die eingeschlossene Luft entweichen, ohne zwischen der Gefäßwandung und dem Topf selbst entgegen dessen Einsetzrichtung austreten zu müssen, was gleichzeitig die Gefahr bedeuten würde, daß ein Teil der Luft eingeschlossen wird und den Wärmeübergang verschlechtert. Da diese Öffnung oder Bohrung an der tiefsten Stelle, nämlich am Boden vorgesehen ist, kann diese Luft praktisch vollständig verdrängt werden, so daß sie dann den Wärmeübergang nicht mehr stören kann.

Die Auskleidung kann weniger als 1 mm bis wenige Millimeter dick sein. Je dünner die Auskleidung ist, um so weniger wirkt sie sich auf die Wärmekapazität und das Gewicht aus. Auf der anderen Seite ist eine gewisse Mindestdicke für den Vorgang des Einschrumpfens und auch für die Lebensdauer zweckmäßig.

Besonders günstig ist es für die gleichzeitig erforderliche gute Abdichtung des Gefäßes, wenn die Auskleidung bis in den Bereich des Gefäßes reicht, in den der Deckel mit seinem Umfangsbereich eingreift, und wenn die Auskleidung in diesem Bereich einen Absatz hat, so daß eine an dem Deckel umlaufende Dichtung an einem durch diesen Absatz vergrößerten Durchmesser der Auskleidung anliegt und durch den Absatz von dem Reaktionsraum abgeschirmt ist. Dadurch kann verhindert werden, daß heiße Schlacketeile bei einer Reaktion gegen den Dichtring geschleudert werden, diesen entzünden oder heiße Gase oder generell die hohe Temperatur den Dichtring vorzeitig schädigt.

Insgesamt ergibt sich vor allem bei Kombination einzelner oder mehrerer der vorbeschriebenen Merkmale und Maßnahmen ein Verbrennungsbehälter, der die Vorteile eines Titanbehälters damit verbindet, daß er auch bei sehr aggressiven Bedingungen in dem Reaktionsraum nicht zu brennen beginnt. Darüber hinaus ergibt sich der Vorteil, daß das Gefäß problemlos beliebig lange in einem Wasserbad stehen kann, ohne daß seine Oberfläche darunter leidet.

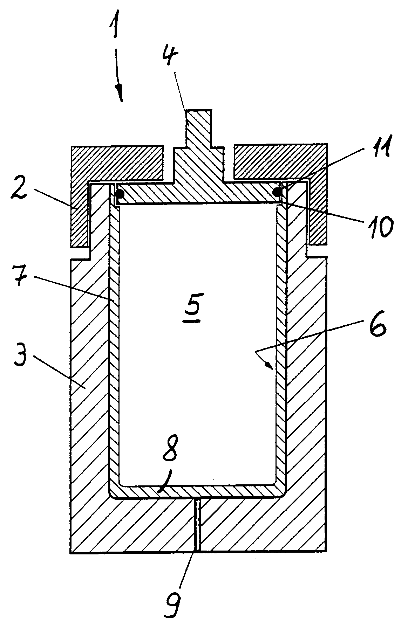

Nachstehend ist ein Ausführungsbeispiel der Erfindung anhand der Zeichnung näher beschrieben.
Die einzige Figur zeigt in schematisierter Darstellung einen vertikalen Längsschnitt eines erfindungsgemäßen Verbrennungsbehälters aus Titan mit einer Auskleidung, wobei Einbauten wie Probebehälter, Zündvorrichtung und Gaszufuhr der Einfachheithalber weggelassen sind.

Ein im ganzen mit 1 bezeichneter Verbrennungsbehälter dient zum Einsetzen in ein Kalorimeter und besteht im wesentlichen aus einem Gefäß 3 und einem öffenbaren Deckel 4, der mit Hilfe einer Überwurfmutter 2 druckdicht festgelegt ist. Ferner gehört zu dem Verbrennungsbehälter 1 ein der Einfachheithalber nicht näher dargestellter Probehalter.

Darüber hinaus erkennt man, daß das Gefäß 3 an seiner den im Inneren befindlichen Reaktionsraum 5 befindlichen Innenseite eine dicht anliegende Auskleidung 6, die aus einem Metall oder aus einer Metall-Legierung besteht, die bei den in dem Verbrennungsbehälter 1 bzw. seinem Gefäß 3 auftretenden Bedingungen und Reaktionen unbrennbar ist. Somit kann das Gefäß 3 - von der Auskleidung 6 abgesehen - aus Titan bestehen.

Dadurch hat das Gefäß 3 und damit auch der gesamte Verbrennungsbehälter 1 ein relativ geringes Gewicht und kann die in ihm bei einer derartigen Probeverbrennung entstehende Wärme aufgrund seiner eigenen starken Erwärmung gut an das ihn in dem Kalorimeter umgebende Medium, in der Regel eine Flüssigkeit, aber eventuell auch ein Gas, gut und aufgrund des großen Wärmegefälles relativ schnell weitergeben.

Gleichzeitig bietet die Auskleidung 6 einen guten Schutz des Titanes vor dem Sauerstoff, dem hohen Druck und der hohen Temperatur, so daß eine Entzündung des Titans vermieden wird.

Die Auskleidung 6 besteht zweckmäßigerweise aus Stahl, insbesondere aus hochlegiertem Stahl, zum Beispiel aus Chrom-Nickel-Stahl, der gegen die Temperaturen, Drücke und Substanzen in dem Reaktionsraum 5 weitestgehend unempfindlich ist und das Titan des Gefäßes 3 dagegen abschirmt, ohne aber einen zu großen Anteil der Wärmekapazität des Gefäßes 3 einzunehmen.

In der Zeichnung erkennt man, daß die Auskleidung 6 die Form eines Topfes mit seitlichen Wänden 7 und einem Boden 8 hat, der in den Reaktionsraum 5 des Gefäßes 3 aus Titan eingefügt und insbesondere eingeschrumpft ist, so daß die Außenseite dieses Topfes die Wandung und den Boden des Reaktionsraumes 5 des Gefäßes 3 fugenlos berührt.

Gegebenenfalls könnte die Auskleidung 6 auch eine Beschichtung sein, die zum Beispiel durch Bedampfung des Reaktionsraumes 5 gebildet ist.

Auch der Deckel 4 und die ihn festlegende Überwurfmutter 2 bestehen aus Titan; die in Gebrauchsstellung dem Reaktionsraum 5 zugewandte Seite oder Oberfläche des Deckels 4 ist dabei ebenfalls mit dem Metall oder der Metall-Legierung bekleidet oder beschichtet, womit der Reaktionsraum 5 ausgekleidet ist, so daß auch hier die vorteilhafte Verwendung von Titan möglich ist, ohne die Gefahr einer Verbrennung des Titanes einzugehen.

Das Gefäß 3 hat an seinem Boden eine durchgehende Öffnung 9 oder Bohrung, die von dem Boden 8 der Auskleidung 6 gegenüber dem Reaktionsraum 5 abgeschlossen ist. Wird die Auskleidung 6 in das Gefäß 3 eingeschoben, kann durch diese Öffnung 9 die Luft entweichen, so daß ein Luftrest zwischen Auskleidung 6 und Gefäß 3 vermieden wird, der den Wärmeübergang verschlechtern könnte.

Die Auskleidung 6 reicht bis in den Bereich des Gefäßes 3, in den der Deckel 4 mit seinem Umfangsbereich eingreift. Die Auskleidung 6 hat in diesem Bereich einen ringförmigen umlaufenden Absatz 10, der etwa stufenförmig ausgebildet ist und in der Weise gestaltet ist, daß eine an dem Deckel 4 umlaufende Dichtung 11, zweckmäßigerweise ein Dichtring, an einem durch diesen Absatz 10 vergrößerten Durchmesser der Auskleidung 6 anliegt, so daß die Dichtung 11 durch diesen Absatz 10 von dem Reaktionsraum 5 abgeschirmt und geschützt ist, so daß bei der Reaktion hochgeschleuderte Partikel oder auch die Hitze selbst von dem Dichtring 11 abgehalten werden. Da die Auskleidung 6 eine genügende Dicke hat, kann sie ohne einen solchen Absatz des Gefäßes 3 dadurch mit diesem Absatz 10 versehen werden, daß ihre Wandstärke in diesem Dichtungsbereich vermindert ist. Diese Bildung des Absatzes 10 durch Verminderung der Dicke der Auskleidung 6 kann bei der Herstellung beispielsweise durch einen spanenden Prozeß, insbesondere durch Ausdrehen auf einfache Weise erzielt werden, wodurch gleichzeitig ein guter Sitz für die Dichtung 11 geschaffen wird.

Der Verbrennungsbehälter 1 für Kalorimeter hat ein einen Reaktionsraum 5 enthaltendes Gefäß 3 mit einem öffenbaren Deckel 4 und besteht aus Titan. Um zu verhindern, daß bei den in einem solchen Verbrennungsbehälter bestehenden Bedingungen eines hohen Sauerstoff-Partialdruckes in Verbindung mit hoher Temperatur das Titan zu brennen beginnt, weist das Gefäß 3 an seiner Innenseite eine dicht anliegende Auskleidung 6 aus einer Metall-Legierung oder aus einem Metall auf, welches bei den erwähnten Bedingungen unbrennbar ist, beispielsweise eine Auskleidung aus insbesondere hochlegiertem Stahl, zum Beispiel aus Chrom-Nickel-Stahl. Im Bereich der Dichtung 11 des Deckels 4 hat die Auskleidung 6 einen ihren Querschnitt erweiternden Absatz 10, so daß diese Dichtung 11 auch räumlich von dem Reaktionsraum 5 abgeschirmt ist.

## Patentansprüche

1. Verbrennungsbehälter (1) für Kalorimeter mit einem einen Reaktionsraum (5) umschließenden Gefäß (3) und mit einem öffenbaren Deckel (4) sowie mit einem Probehalter für das zu untersuchende Gut, welcher Verbrennungsbehälter (1) die Verbrennungswärme aufnimmt und an ein umgebendes Medium weiterleitet, so daß aus der Erwärmung des Verbrennungsbehälters (1) und dieses Mediums der Verbrennungsenergiegehalt der Probe bestimmbar ist, wobei zumindest das Gefäß (3) des Verbrennungsbehälters (1) aus Titan besteht, **dadurch gekennzeichnet**, daß das Gefäß (3) an seiner Innenseite eine dicht anliegende Auskleidung (6) aus einer Metall-Legierung oder aus einem Metall aufweist, welches bei den in dem Verbrennungsbehälter (1) auftretenden Bedingungen und Reaktionen unbrennbar ist.

2. Verbrennungsbehälter nach Anspruch 1, dadurch gekennzeichnet, daß die Auskleidung (6) aus Stahl, insbesondere aus hochlegiertem Stahl, zum Beispiel aus Chrom-Nickel-Stahl, besteht.

3. Verbrennungsbehälter nach Anspruch 1 oder 2, dadurch gekennzeichnet, daß die Auskleidung (6) die Form eines Topfes hat, der in den Reaktionsraum (5) des Gefäßes (3) aus Titan eingesetzt oder eingefügt, insbesondere eingeschrumpft ist, wobei vorzugsweise die Außenseite dieses Topfes die Wandung und den Boden des Reaktionsraumes (5) fugenlos berührt.

4. Verbrennungsbehälter nach Anspruch 1 oder 2, dadurch gekennzeichnet, daß die Auskleidung (6) eine Beschichtung, zum Beispiel eine durch Bedampfung gebildete Beschichtung ist.

5. Verbrennungsbehälter nach einem der Ansprüche 1 bis 4, dadurch gekennzeichnet, daß der Deckel (4) und/oder die ihn festlegende Haltevorrichtung, insbesondere eine Überwurfmutter (2), aus Titan bestehen und zumindest die in Gebrauchsstellung dem Reaktionsraum (5) zugewandte Oberfläche insbesondere mit dem Metall oder der Metall-Legierung bekleidet oder beschichtet ist, womit der Reaktionsraum (5) des Gefäßes ausgekleidet ist.

6. Verbrennungsbehälter nach einem der Ansprüche 1 bis 5, dadurch gekennzeichnet, daß das Gefäß (3) an seinem Boden wenigstens eine durchgehende Öffnung (9) oder Bohrung hat, die von der Auskleidung (6) gegenüber dem Reaktionsraum (5) abgeschlossen ist.

7. Verbrennungsbehälter nach einem der Ansprüche 1 bis 6, dadurch gekennzeichnet, daß die Auskleidung (6) weniger als 1 mm bis wenige Millimeter dick ist.

8. Verbrennungsbehälter nach einem der Ansprüche 1 bis 7, dadurch gekennzeichnet, daß die Auskleidung (6) bis in den Bereich des Gefäßes (3) reicht, in den der Deckel (4) mit seinem Umfangsbereich eingreift, und daß die Auskleidung (6) in diesem Bereich einen Absatz (10) hat, so daß eine an dem Deckel (4) umlaufende Dichtung (11) an einem durch diesen Absatz (10) vergrößerten Durchmesser der Auskleidung (6) anliegt und durch den Absatz (10) von dem Reaktionsraum (5) abgeschirmt ist.

9. Verbrennungsbehälter nach Anspruch 8, dadurch gekennzeichnet, daß der Absatz (10) durch Verminderung der Dicke der Auskleidung (6) gebildet ist.
